(19)

**Europäisches Patentamt**
**European Patent Office**
**Office européen des brevets**

(11) **EP 4 540 353 B1**

(12) **EUROPEAN PATENT SPECIFICATION**

(45) Date of publication and mention
of the grant of the patent:
**18.02.2026  Bulletin 2026/08**

(21) Application number: **23751472.4**

(22) Date of filing: **06.07.2023**

(51) International Patent Classification (IPC):
**C10M 133/04** *(2006.01)*

(52) Cooperative Patent Classification (CPC):
**C10M 133/04;** C10M 2215/04; C10N 2030/12;
C10N 2040/30; Y02P 20/582

(86) International application number:
**PCT/US2023/069684**

(87) International publication number:
**WO 2024/011157 (11.01.2024 Gazette 2024/02)**

(54) **LUBRICANT COMPOSITIONS INCLUDING DIETHYLENETRIAMINE PENTAACETIC ACID AS A CORROSION INHIBITOR**

SCHMIERMITTELZUSAMMENSETZUNGEN MIT DIETHYLENTRIAMINPENTAESSIGSÄURE ALS KORROSIONSINHIBITOR

COMPOSITIONS LUBRIFIANTES COMPRENANT DE L'ACIDE DIÉTHYLÈNE TRIAMINE PENTA ACÉTIQUE EN TANT QU'INHIBITEUR DE CORROSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **08.07.2022   US 202263359591 P**

(43) Date of publication of application:
**23.04.2025   Bulletin 2025/17**

(73) Proprietor: **Dow Global Technologies LLC**
**Midland, MI 48674 (US)**

(72) Inventors:
• **DEO, Puspendu**
**Lake Jackson, Texas 77566 (US)**
• **EWART, Sean**
**Lake Jackson, Texas 77566 (US)**
• **EVANS-BEATTY, Cathi**
**Lake Jackson, Texas 77566 (US)**

(74) Representative: **Boult Wade Tennant LLP**
**Salisbury Square House**
**8 Salisbury Square**
**London EC4Y 8AP (GB)**

(56) References cited:
**CN-A- 104 293 443      CN-A- 114 644 953
US-A- 4 294 853      US-A1- 2020 277 544**

EP 4 540 353 B1

**Description**

**CROSS REFERENCE TO RELATED APPLICATION**

This application claims priority to U.S. Provisional Application Serial No. 63/359,591, filed July 8, 2022,

**TECHNICAL FIELD**

Embodiments described herein generally relate to corrosion inhibition and, more specifically, to lubricant compositions with corrosion inhibitors.

**BACKGROUND**

Acid Copolymer Resins (ACR) may be used to produce packing materials, building panels, and water pipes, among other things. As a result of this utility there is a worldwide demand for ACRs. ACR production often involves the use of corrosive materials. Over time these corrosive materials can corrode the components of an ACR-producing train requiring the replacement of these components. The replacement of these components may increase the cost of ACR production. Therefore, there is a need for improvement in the production of ACR, and more specifically there is a need for improvement in the protection of ACR-producing trains from the effects of corrosion. CN114644953 discloses polyethylene compressor oils comprising as rust inhibitor a fatty acid or derivatives thereof.

**SUMMARY**

Embodiments of the present disclosure meet this need by including diethylenetriamine pentaacetic acid (DTPA) in lubricant compositions in order to inhibit corrosion.

According to one or more embodiments of the present disclosure, a lubricant composition is provided. The lubricant composition comprises: an oil lubricant and from 1.5 wt% to 15 wt% of a corrosion inhibitor, wherein the corrosion inhibitor is DTPA.

Additional features and advantages will be set forth in the detailed description which follows, and in part will be readily apparent to those skilled in the art from that description or recognized by practicing the embodiments described herein, including the drawings, the detailed description that follows and the claims.

**BRIEF DESCRIPTION OF THE DRAWINGS**

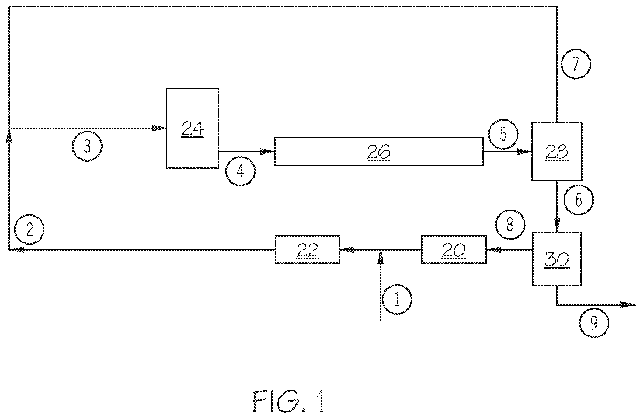

FIG. 1 schematically depicts a reactor system, according to one or more embodiments of the present disclosure.

When describing the simplified schematic illustration of FIG. 1, the numerous valves, temperature sensors, electronic controllers, and the like, which may be used and are well known to a person of ordinary skill in the art, are not included. However, it should be understood that these components are within the scope of the present disclosure.

Reference will now be made in greater detail to various embodiments, some of which are illustrated in the accompanying drawing.

**DETAILED DESCRIPTION**

Specific embodiments of the present application will now be described. The disclosure may, however, be embodied in different forms and should not be construed as limited to the embodiments set forth in this disclosure. Rather, these embodiments are provided so that this disclosure will be thorough and complete, and will fully convey the scope of the subject matter to those skilled in the art.

The present disclosure is directed to lubricant compositions. The lubricant composition includes a lubricant oil and a corrosion inhibitor. The corrosion inhibitor is DTPA. Such lubricant compositions including DTPA may be particularly well suited for use in a free-radical polymerization process, where bronze packing rings are utilized in a compressor.

In one or more embodiments, the lubricant composition may comprise an oil lubricant. The oil lubricant may comprise at least one oil, and may contain one or more additives, for example, one or more lubrication agents. Additives may be added to improve lubricity, flow properties, thermal stability, and/or other properties. In one or more embodiments the at least one oil may be a viscous liquid with increased viscosity, as compared to that of water at the same temperature and pressure, and which is derived from petroleum. The at least one oil may provide lubrication and reduced friction between moving surfaces of rotational and/or reciprocating mechanisms. In one or more embodiments, the oil may be one or more mineral oils and polyalkylene glycol base oils.

In some embodiments, the oil may have a kinematic viscosity at 40 °C of from 50 $mm^2$/s to 200 $mm^2$/s. For

example, the oil may have a kinematic viscosity of from 50 mm$^2$/s to 100 mm$^2$/s, from 100 mm$^2$/s to 150 mm$^2$/s, from 150 mm$^2$/s to 200 mm$^2$/s, or any combination of these ranges.

As described herein, the lubricant composition comprises a corrosion inhibitor. in an amount from 1.5 wt.% to 15 wt.%. For example, the lubricant composition may comprise a corrosion inhibitor in an amount from 5 wt.% to 10 wt.%, from 10 wt.% to 15 wt.%, or any combination of these ranges. In some embodiments, the lubricant composition may comprise a corrosion inhibitor in an amount from 2 wt.% to 12.5 wt.%, or from 2.5 wt.% to 10 wt.%. In some embodiments, the lubricant composition may comprise DTPA in an amount from 2.5 wt.% to 10 wt.%.

In one or more embodiments, the lubricant composition may be used in a method to reduce corrosion comprising exposing a metal component to a solution containing the lubricant composition and (meth)acrylic acid, wherein the lubricant composition reduces metal corrosion. As used in the present disclosure, the term "(meth)acrylic acid" can be used to refer to either methacrylic acid, or acrylic acid, or both.

In one or more embodiments, the solution containing the lubricant composition may comprise a co-solvent. The co-solvent may comprise a carboxylic acid, an alcohol, or combinations thereof. In some embodiments, the co-solvent may comprise methanol.

In one or more embodiments, the metal component may comprise bronze packing rings. In one or more embodiments, the bronze packing rings may be a part of a compressor. In some embodiments the bronze packing rings may be a part of a compressor unit utilized in a high pressure polyethylene reactor, such as the one depicted schematically in FIG. 1

In one or more embodiments, the lubricant composition may be used in a free radical polymerization process comprising polymerizing ethylene monomer and optionally (meth)acrylic acid in the presence of the lubricant composition via free radical polymerization in a high pressure polyethylene reactor having a compressor with bronze packing rings. A free radical polymerization process, for the production of an ethylene-based polymer, is usually carried out at an elevated pressure, typically at least 100 MPa. For example, the free radical polymerization process may be carried out at least 200 MPa, at least 300 MPa, at least 400 MPa, or at least 500 MPa.

The following definitions may be helpful in understanding the operation of an example reactor system that may be suitable for use with the lubricant compositions described herein.

The terms "feed" or "feed stream," as used herein, refer to fresh and/or recycled reactant(s) added to a reaction zone at an inlet to the reaction zone.

The term "reaction zone," as used herein, refers to a reactor zone where polymerization reaction is initiated or reinitiated by the addition of free radicals and/or the decomposition of components into free radicals or components which generate free radicals.

The term "reactor system," as used herein, refers to the components (devices) used to polymerize and isolate a polymer. Such components/devices include, but are not limited to, one or more reactors, a Hyper-compressor, a Primary compressor, and a Booster compressor. A reactor system typically comprises at least one reactor, for example tubular reactor(s), autoclave reactor(s), or any combination thereof.

The term "injection point," as used herein, refers to the inlet location of a device (used in a polymerization process) where a feed stream is added into the device.

The term "pressurizing," as used herein, refers to increasing the pressure of a liquid or feed to a higher pressure level.

The term "compression system," as used herein, refers to a compression device, which increases the pressure of a vapor (for example, ethylene vapor below or above its critical point) to a higher pressure level. Feeding a comonomer could include pressurizing and feeding the reactive comonomer with an ultra-high pressure reciprocating plunger pump, directly to a reactor zone and/or to a feed stream to the reaction zone, and/or feeding the comonomer by a combination of pressurizing with a high pressure pump, and further compressing through reciprocating plunger compressors (for example, Hyper-compressor, Primary compressor and/or Booster compressor).

The term "compression," as used herein, refers to increasing the pressure of a vapor (for example, ethylene vapor below or above its critical point) to a higher pressure level.

The booster compressor is a device that compresses, for example, the low pressure recycle coming from the low pressure separator to the pressure level required at the inlet side of the primary compressor. This compression can take place in one or multiple compression stages, and can be combined with intermediate cooling. The booster compressor can consist of single or multiple compressor frames, and can be potentially combined with primary compressor frame(s).

The primary compressor is a device that compresses, for example, the following: a) the fresh incoming ethylene, and/or b) the low pressure recycle coming from the booster compressor; each to the pressure level required at the inlet side of the hyper-compressor. This compression can take place in one or multiple compression stages, and can be combined with intermediate cooling. The primary compressor can consist of single or multiple compressor frames, and can be potentially combined with booster compressor frame(s).

The hyper-compressor, or secondary compressor, is a device that compresses, for example, the monomer coming from the primary compressor to a pressure level required to feed the reactor at its inlet pressure set point. This compression can take place in one or multiple compression stages, and can be combined with intermediate cooling. The hyper-compressor typically comprises a plunger reciprocating compressor, and can consist of single or multiple compressor frame(s).

Now referring to FIG. 1, an example reactor system that may be suitable for use with the lubricant compositions described herein is schematically depicted. It should be understood that not all portions of FIG. 1 should be construed as essential to the claimed subject matter. Moreover, while the lubricant compositions in the appended claims are described herein in the context of FIG. 1, such recited compositions should be understood as adaptable to other systems, as would be understood by those skilled in the art.

FIG 1. shows a generalized flow schematic of a high pressure polymerization process with a reactor system containing a reactor 26 which may be a tubular reactor, an autoclave reactor, or combination of both tubular and autoclave reactors. Stream (1) represents the fresh monomer make-up, which is compressed, together with the outlet of the booster compressor (20), by the primary compressor (22), to stream (2). The fresh monomer make-up may comprise ethylene. Stream (2) is combined with the high pressure recycle stream (7) from the high pressure separator (28) in the hyper-compressor inlet stream (3), and fed to the suction inlet(s) of the Hyper-compressor (24). The hyper-compressor compresses the monomer feed streams to a level sufficient to feed to the reactor (26). Stream 4 represent the compressed monomer feed streams which are fed to the reactor (26). The high-pressure separator (28) separates the product steam (5) into a polymer-rich stream (6) and an unreacted monomer-rich stream (7). Stream (7) is recycled to use again in the process and stream (6) is taken to the low-pressure separator (30). Low pressure separator (30) separates steam (6) into monomer stream (8) which flows to the booster compressor (20), and polymer stream (9) which is taken for further processing.

In one or more embodiments, the lubricant composition as described herein may be utilized in the hyper-compressor (24). For example, the lubricant composition comprising an oil lubricant and a corrosion inhibitor comprising DTPA may be exposed to the metal components of the hyper-compressor (24). In some embodiments, the metal components of the hyper-compressor (24) may comprise bronze packing rings.

## TEST METHODS

### Corrosion Testing

Corrosion testing was conducted using 936-bearing bronze coupons with a density of 8.8 g/cm$^3$ at 20 °C. The bronze coupons were cut to a diameter of 1.27 cm and a thickness of 0.32 cm. The testing was done in a glove box and reagents were degassed and dried as necessary before being brought into the glove box. All experiments were repeated 5 times and the average was reported. The premeasured coupons were added to 40 ml vials with pressure relief caps. The reagents were then added to the vials and the pressure relief caps were secured. The vials were then removed from the glove box and pictures were taken of the vials. The vials were then placed inside a heating block and heated at 100 °C for 2 weeks. After 2 weeks the vials were removed from the heating block and allowed to cool. When the vials had cooled to room temperature the coupons were removed from the vial using tweezers and laid out on a chemwipe. The coupons were rinsed with tetradecane over a metal pan and wiped off completely with a metal spatula. The flat end of the spatula was used at about a 30° angle to scrape off any corrosion or build up on the surface of the coupon. Care was taken to not apply maximum pressure to the coupon during scraping to avoid gouging the surface of the coupon. The coupons were rinsed with clean tetradecane and wiped with a chemwipe. The cleaned coupons were each placed in separate 20 ml vials. The vials with the cleaned coupons were placed in a vacuum oven overnight at 160 °C to dry. The dry coupons were then weighed. The difference between the dry coupon weight and the starting coupon weight was measured and recorded.

### Corrosion Rate

Corrosion rate was measured using the formula below: where weight loss is the difference between the dry coupon weight and the starting coupon weight, the alloy density is 8.8 g/cm$^3$, the exposed area of the coupons was measured by considering the coupons as cylinders and the exposed area was calculated as that of a cylinder. The coupons had a diameter of 1.27 cm and a thickness of 0.32 cm for an exposed area of 3.86 cm$^2$, the exposure time is 336 hours, and K is the K-factor. The alloy density and the K-factor values were gathered from the literature.

$$Corrosion\ Rate\ (CR) = \frac{Weight\ Loss(g) * K}{Alloy\ Density\left(\frac{g}{cm^3}\right) * Exposed\ Area(A) * Exposure\ Time(hr)} \qquad (Eq.\ 1)$$

**Corrosion Inhibition**

Corrosion inhibition was measured using the following formula to calculate the percent of corrosion inhibition. The corrosion rate uninhibited was calculated from the corrosion rate of the coupon with no inhibitor present. The corrosion rate inhibited was calculated from the corrosion rate of the coupon with an added inhibitor.

$$\text{Corrosion Inhibition \%} = \frac{Corrosion\ rate\ uninhibited - Corrrosion\ rate\ inhibited}{Corrosion\ rate\ uninhibited} * 100 \quad (Eq.\ 2)$$

**EXAMPLES**

Embodiments will be further clarified by the following examples.

Table 1 - Materials Added for Corrosion Inhibition Tests

| Experiment # | Experiment | Hydrobrite 380, g | Methanol, g | Methacrylic acid, g | Inhibitor, g |
|---|---|---|---|---|---|
| A | No inhibitor | 7.2 | 0.8 | 4.8 | 0 |
| 2 | Inhibitor: 2.5% DTPA | 7.02 | 0.8 | 4.8 | 0.18 |
| 3 | Inhibitor: 5% DTPA | 6.84 | 0.8 | 4.8 | 0.36 |
| 4 | Inhibitor: 10% DTPA | 6.48 | 0.8 | 4.8 | 0.72 |
| B | Inhibitor: 5% EDTA | 6.84 | 0.8 | 4.8 | 0.36 |

Table 1 shows the compositions of the lubricant compositions which were tested for their corrosion inhibition performance. Corrosion inhibitor tests were run with a formulation having lubricant oil, methanol, methacrylic acid, and optionally a corrosion inhibitor. The lubricant oil used was Hydrobrite 380 which is a commonly available white mineral oil produced by Sonneborn. The inhibitors used were diethylenetriaminepentaacetic acid (DTPA) and ethylenediaminetetraacetic acid (EDTA). The amount of inhibitor added in each experiment was calculated as a weight percentage of the hydrobrite 380 lubricant oil.

Table 2 - Corrosion Testing Results

| Experiment # | Experiment | Coupon type | Alloy density g/cm$^3$ | Exposed area (cm$^2$) | K factor | Exposure time (hr) | Average weight loss (g) |
|---|---|---|---|---|---|---|---|
| A | No Inhibitor | Bronze-Lead | 8.8 | 3.86 | 3.45X10$^6$ | 336 | 0.0405 |
| 2 | Inhibitor: 2.5% DTPA | Bronze-Lead | 8.8 | 3.86 | 3.45X10$^6$ | 336 | 0.0065 |
| 3 | Inhibitor: 5% DTPA | Bronze-Lead | 8.8 | 3.86 | 3.45X10$^6$ | 336 | 0.0044 |
| 4 | Inhibitor: 10% DTPA | Bronze-Lead | 8.8 | 3.86 | 3.45X10$^6$ | 336 | 0.0047 |
| B | Inhibitor: 5% EDTA | Bronze-Lead | 8.8 | 3.86 | 3.45X10$^6$ | 336 | 0.04035 |

Table 3 - Corrosion Inhibition Percentage Results

| Experiment # | Experiment | Corrosion rate mils/year (mpy) | % Corrosion inhibition |
|---|---|---|---|
| A | No inhibitor | 12.25 | 0 |
| 2 | Inhibitor: 2.5% DTPA | 1.97 | 83.9 |
| 3 | Inhibitor: 5% DTPA | 1.32 | 89.2 |
| 4 | Inhibitor: 10% DTPA | 1.42 | 88.4 |

(continued)

| Experiment # | Experiment | Corrosion rate mils/year (mpy) | % Corrosion inhibition |
|---|---|---|---|
| B | Inhibitor: 5% EDTA | 12.2 | 0.5 |

Referring to the corrosion inhibition test results in Tables 2 and 3, Experiments with DTPA (i.e., Experiments 2-4) have significantly more corrosion inhibition and significantly less weight loss due to corrosion than the Comparative Examples without DTPA, such as Comparative Examples A and B. Put simply, Tables 2 and 3 indicate that DTPA showed excellent corrosion inhibition against methanol and methacrylic acid when combined with lubricant oil. Without being limited by theory, the DTPA structure imparts improved hydrophobicity as compared to the EDTA, which is believed to be correlated in part the improved corrosion resistance

It is intended that the specification cover the modifications and variations of the various embodiments described herein provided such modification and variations come within the scope of the appended claims and their equivalents.

For the purposes of defining the present technology, the transitional phrase "consisting of" may be introduced in the claims as a closed preamble term limiting the scope of the claims to the recited components or steps and any naturally occurring impurities. For the purposes of defining the present technology, the transitional phrase "consisting essentially of' may be introduced in the claims to limit the scope of one or more claims to the recited elements, components, materials, or method steps as well as any non-recited elements, components, materials, or method steps that do not materially affect the novel characteristics of the claimed subject matter. The transitional phrases "consisting of" and "consisting essentially of" may be interpreted to be subsets of the open-ended transitional phrases, such as "comprising" and "including," such that any use of an open ended phrase to introduce a recitation of a series of elements, components, materials, or steps should be interpreted to also disclose recitation of the series of elements, components, materials, or steps using the closed terms "consisting of" and "consisting essentially of." For example, the recitation of a composition "comprising" components A, B, and C should be interpreted as also disclosing a composition "consisting of" components A, B, and C as well as a composition "consisting essentially of" components A, B, and C. Any quantitative value expressed in the present application may be considered to include open-ended embodiments consistent with the transitional phrases "comprising" or "including" as well as closed or partially closed embodiments consistent with the transitional phrases "consisting of" and "consisting essentially of."

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment. The invention is set by the appended claims.

## Claims

1. A lubricant composition comprising:

    an oil lubricant and
    from 1.5 wt.% to 15 wt.% of a corrosion inhibitor, wherein the corrosion inhibitor is diethylenetriamine pentaacetic acid (DTPA).

2. The lubricant composition of claim 1, wherein the oil lubricant comprises mineral oil.

3. The lubricant composition of any preceding claim, wherein the lubricant composition comprises from 2.5 wt.% to 10 wt.% corrosion inhibitor.

4. A method for reducing corrosion comprising:
    exposing a metal component to a solution comprising the lubricant composition of any preceding claim and (meth) acrylic acid, wherein the lubricant composition reduces metal corrosion.

**5.** The method of claim 4, wherein the solution may comprise co-solvent.

**6.** The method of claim 5, wherein the co-solvent comprises carboxylic acid, alcohol, or combinations thereof.

**7.** The method of claim 6, wherein the alcohol comprises methanol.

**8.** The method of any of claims 4-7, wherein the metal component comprises bronze packing rings.

**9.** The method of claim 8, wherein the bronze packing rings are part of a compressor.

**10.** The method of claim 8, wherein the bronze packing rings are part of a compressor unit utilized in a high pressure polyethylene reactor.

**11.** A free-radical polymerization process comprising:
polymerizing ethylene monomer and optionally (meth)acrylic acid comonomer in the presence of the lubricant composition of any of claims 1-3 via free radical polymerization in a high pressure polyethylene reactor having a compressor with bronze packing rings.


**Patentansprüche**

**1.** Schmiermittelzusammensetzung, umfassend:

ein Ölschmiermittel und
zu von 1,5 Gew.-% bis 15 Gew.-% einen Korrosionshemmer, wobei der Korrosionshemmer Diethylentriaminpentaessigsäure (DTPA) ist.

**2.** Schmiermittelzusammensetzung nach Anspruch 1, wobei das Ölschmiermittel Mineralöl umfasst.

**3.** Schmiermittelzusammensetzung nach einem der vorstehenden Ansprüche, wobei die Schmiermittelzusammensetzung zu von 2,5 Gew.-% bis 10 Gew.-% Korrosionshemmer umfasst.

**4.** Verfahren zum Reduzieren von Korrosion, umfassend:
Aussetzen einer Metallkomponente einer Lösung, die die Schmiermittelzusammensetzung nach einem der vorstehenden Ansprüche und (Meth)acrylsäure umfasst, wobei die Schmiermittelzusammensetzung Metallkorrosion reduziert.

**5.** Verfahren nach Anspruch 4, wobei die Lösung Co-Lösungsmittel umfassen kann.

**6.** Verfahren nach Anspruch 5, wobei das Co-Lösungsmittel Carbonsäure, Alkohol oder Kombinationen davon umfasst.

**7.** Verfahren nach Anspruch 6, wobei der Alkohol Methanol umfasst.

**8.** Verfahren nach einem der Ansprüche 4 bis 7, wobei die Metallkomponente Bronze-Dichtungsringe umfasst.

**9.** Verfahren nach Anspruch 8, wobei die Bronze-Dichtungsringe Teil eines Kompressors sind.

**10.** Verfahren nach Anspruch 8, wobei die Bronze-Dichtungsringe Teil einer Kompressoreinheit sind, die in einem Hochdruck-Polyethylenreaktor verwendet wird.

**11.** Radikalischer Polymerisationsprozess, umfassend:
Polymerisieren von Ethylenmonomer und optional (Meth)acrylsäure-Comonomer in Gegenwart der Schmiermittelzusammensetzung nach einem der Ansprüche 1 bis 3 über radikalische Polymerisation in einem Hochdruck-Polyethylenreaktor mit einem Kompressor mit Bronze-Dichtungsringen.

**Revendications**

1. Composition lubrifiante comprenant :

   une huile lubrifiante et
   de 1,5 % en poids à 15 % en poids d'un inhibiteur de corrosion, dans laquelle l'inhibiteur de corrosion est l'acide diéthylènetriamine pentacétique (DTPA).

2. Composition lubrifiante selon la revendication 1, dans laquelle l'huile lubrifiante comprend de l'huile minérale.

3. Composition lubrifiante selon l'une quelconque revendication précédente, dans laquelle la composition lubrifiante comprend de 2,5 % en poids à 10 % en poids d'inhibiteur de corrosion.

4. Procédé de réduction de corrosion, comprenant :
   l'exposition d'un composant métallique à une solution comprenant la composition lubrifiante de quelconque revendication précédente et de l'acide (méth)acrylique, dans lequel la composition lubrifiante réduit la corrosion de métal.

5. Procédé selon la revendication 4, dans lequel la solution peut comprendre un cosolvant.

6. Procédé selon la revendication 5, dans lequel le cosolvant comprend un acide carboxylique, un alcool ou des combinaisons de ceux-ci.

7. Procédé selon la revendication 6, dans lequel l'alcool comprend du méthanol.

8. Procédé selon l'une quelconque des revendications 4 à 7, dans lequel le composant métallique comprend des anneaux d'étanchéité en bronze.

9. Procédé selon la revendication 8, dans lequel les anneaux d'étanchéité en bronze font partie d'un compresseur.

10. Procédé selon la revendication 8, dans lequel les anneaux d'étanchéité en bronze font partie d'une unité de compression utilisée dans un réacteur de polyéthylène à haute pression.

11. Procédé de polymérisation radicalaire comprenant :
    la polymérisation du monomère éthylène et éventuellement du comonomère acide (méth)acrylique en présence de la composition lubrifiante selon l'une quelconque des revendications 1 à 3 par l'intermédiaire de polymérisation radicalaire dans un réacteur de polyéthylène à haute pression doté d'un compresseur avec des anneaux d'étanchéité en bronze.

FIG. 1

**REFERENCES CITED IN THE DESCRIPTION**

**Patent documents cited in the description**

- US 63359591

- CN 114644953